(19) Europäisches Patentamt
European Patent Office
Office européen des brevets

(11) **EP 3 420 508 B1**

(12) **EUROPEAN PATENT SPECIFICATION**

(45) Date of publication and mention
of the grant of the patent:
**14.01.2026 Bulletin 2026/03**

(21) Application number: **17709192.3**

(22) Date of filing: **21.02.2017**

(51) International Patent Classification (IPC):
*H04L 9/00* (2022.01)      *G06Q 20/22* (2012.01)
*G06Q 20/06* (2012.01)      *G06Q 20/38* (2012.01)

(52) Cooperative Patent Classification (CPC):
**G06Q 20/065; G06Q 20/223; G06Q 20/3827;
G06Q 20/3829; H04L 9/50;** G06Q 2220/00;
H04L 2209/56

(86) International application number:
**PCT/IB2017/050980**

(87) International publication number:
**WO 2017/145049 (31.08.2017 Gazette 2017/35)**

(54) **CONSOLIDATED BLOCKCHAIN-BASED DATA TRANSFER CONTROL METHOD AND SYSTEM**

VERFAHREN UND SYSTEM ZUM KONSOLIDIERTEN BLOCKCHAIN-BASIERTEN DATENTRANSFER

PROCÉDÉ ET SYSTÈME DE COMMANDE DE TRANSFERT DE DONNÉES BASÉE SUR UNE CHAÎNE DE BLOCS CONSOLIDÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.02.2016 GB 201603117
16.03.2016 GB 201604498
15.11.2016 GB 201619301**

(43) Date of publication of application:
**02.01.2019 Bulletin 2019/01**

(73) Proprietor: **nChain Licensing AG
6300 Zug (CH)**

(72) Inventors:
• **WRIGHT, Craig Steven
Cardiff CF10 2HH (GB)**
• **SAVANAH, Stephane
Cardiff CF10 2HH (GB)**

(74) Representative: **Gill Jennings & Every LLP
The Broadgate Tower
20 Primrose Street
London EC2A 2ES (GB)**

(56) References cited:
**US-A1- 2015 120 567      US-A1- 2015 244 690**

• **GUS GUTOSKI ET AL: "Hierarchical deterministic Bitcoin wallets that tolerate key leakage (Short paper)", 1 February 2012 (2012-02-01), XP055369870, Retrieved from the Internet <URL:https://eprint.iacr.org/2014/998. pdf> [retrieved on 20170505]**
• **"Mastering bitcoin : [unlocking digital cryptocurrencies]", 20 December 2014, O'REILLY MEDIA, Beijing Cambridge Farnham Köln Sebastopol Tokyo, ISBN: 978-1-4493-7404-4, article ANDREAS M. ANTONOPOULOS: "Mastering Bitcoin - Unlocking Digital Cryptocurrencies", XP055306939**

## Description

### Technical Field

The present disclosure relates generally to peer-to-peer distributed technology such as the Bitcoin blockchain. It also relates to the use of cryptographic techniques for the secure and efficient determination and/or identification of transactions on a blockchain, resulting in a technical solution which is highly versatile and can be used to control processes operating in relation to, and interacting with, a blockchain platform. The invention can be used to determine which blockchain transactions (or data therefrom) are to be selected for copying and/or transmission to another computer-based destination.

### Background

A blockchain is a peer-to-peer, electronic ledger which is implemented as a computer-based decentralised, distributed system made up of blocks which in turn are made up of transactions. Each transaction is a data structure that encodes the transfer of control of a digital asset between participants in the blockchain system, and includes at least one input and at least one output. Each block contains a hash of the previous block to that blocks become chained together to create a permanent, unalterable record of all transactions which have been written to the blockchain since its inception. Transactions contain small programs known as scripts embedded into their inputs and outputs, which specify how and by whom the outputs of the transactions can be accessed. On the Bitcoin platform, these scripts are written using a stack-based scripting language.

In order for a transaction to be written to the blockchain, it must be "validated". Network nodes (miners) perform work to ensure that each transaction is valid, with invalid transactions rejected from the network. Software clients installed on the nodes perform this validation work on an unspent transaction (UTXO) by executing its locking and unlocking scripts. If execution of the locking and unlocking scripts evaluate to TRUE, the transaction is valid and the transaction is written to the blockchain. Thus, in order for a transaction to be written to the blockchain, it must be i) validated by the first node that receives the transaction - if the transaction is validated, the node relays it to the other nodes in the network; and ii) added to a new block built by a miner; and iii) mined, i.e. added to the public ledger of past transactions.

As the blockchain offers various advantages, many organisations (entities) have begun to investigate ways in which this technology can be incorporated into their computing infrastructure. Entities may implement complex internal computing systems for the storage and/or processing of their data. For example, these systems may be based on large database structures which are required for handling the volumes of data that is generated and/or captured by the organisation's activities. For example, a financial system may require the management and synchronisation of various databases so that the generated and captured data can be accurately processed or communicated. However, while it is desirable to use blockchain technologies for recording data and events, as the blockchain provides advantages such as a tamper-proof and permanent record, a technical difficulty arises when disparate computing architectures and platforms need to be used in conjunction with one another. The blockchain platform may not interface with the entity's internal systems. Therefore, there is an integration and communication problem arising from the different hardware and software systems being used. The difficulty of identifying and then extracting data from one system (eg blockchain) so that it can be transmitted to a different system (e.g. DBMS) is not a trivial consideration. Furthermore, it is desirable to achieve this cross-platform integration in a way which does not require changes to either underlying platform. Further still, the blockchain stores the data in transactions (Txs) which are built up into blocks. Identifying and the accessing the relevant data from the blockchain is a difficult task, and needs to be performed in a manner which is secure and also efficient, both in terms of time and computational effort. The invention addresses at least these technical concerns.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

In this document we use the term 'blockchain' to include all forms of electronic, computer-based, distributed ledgers. These include consensus-based blockchain and transaction-chain technologies, permissioned and un-permissioned ledgers, shared ledgers and variations thereof. The most widely known application of blockchain technology is the Bitcoin ledger, although other blockchain implementations have been proposed and developed. While Bitcoin may be referred to herein for the purpose of convenience and illustration, it should be noted that the invention is not limited to use with the Bitcoin blockchain and alternative blockchain implementations and protocols fall within the scope of the present invention.

Any discussion of documents, acts, materials, devices, articles or the like which has been included in the present disclosure is not to be taken as an admission that any or all of these matters form part of the prior art base or were common general knowledge in the field relevant to the present disclosure as it existed before the priority date of each claim of this application.

US Publication 2015/0244690A1 (published on 27 August 2015 in the name of ENT Technologies, Inc. ) discusses a generalised entity network translation using relational key infrastructure techniques , so that one or more policies associated with public key data can be securely authenticated and updated. This document discusses techniques for creating a new type of key infrastructure for creating digital systems for use with blockchain techniques.

Non-patent publication entitled "Hierarchical deterministic Bitcoin wallets that tolerate key leakage" by Gus Gutoski et al. discusses a Bitcoin wallet (which is a set of private keys) and a hierarchical deterministic (HD) wallet, where child keys are generated pseudo-randomly from a master key.

## Summary

Method and systems in accordance with the present invention are defined in the appended claims. The invention may provide a cryptographic method and corresponding system. It may provide a blockchain-implemented method/system. It may provide a control system for the secure identification, extraction, transmission, processing and/or update of data. This data may be derived, access or copied from a blockchain. It may provide a method/system of using cryptographic keys to integrate a blockchain with a non-blockchain implemented computing resource such as a data storage/processing resource. It may provide a method/system of using cryptographic keys to identify and/or extract data from a blockchain. It may provide a method/system for integrating that blockchain-sourced data into a non-blockchain implemented storage resource. The entity may be referred to as an organisation, system or network. It may be a logical entity, a virtual, computer-based or a physical entity. It may comprise natural person(s).

There may be provided a computer-implemented method for efficient identification, association or determination of blockchain transactions (Txs) with one or more entities. The blockchain transactions may be recorded in a peer-to-peer distributed ledger (blockchain).

The method may comprise the steps:

associating public addresses of the entities with one or more identifiers of a first classification type to classify the public addresses based on the first classification type; this may involve logically linking or associating the public addresses with at least one identifier, the identifier belonging to a classification type;
receiving, from a communication network, a first identifier of the one or more identifiers of the first classification type;
determining a first set of public addresses associated with the first identifier, wherein the first set of public address is a subset of the public addresses; and
identifying a first set of transactions in the blockchain based on the first set of public addresses associated with the first identifier. The first set of transactions may be a subset of the transactions on the blockchain.

The method may further comprise the steps of extracting or copying at least a portion of data from the first set of blockchain transactions (which may be called "transaction data") and/or transmitting the extracted transaction data to a computing resource which is not part of the blockchain platform or network.

A public address may be derived from, or based on, a cryptographic key. This may be a deterministic key.

Additionally or alternatively, the invention may provide a method of generating public keys for a linked or associated structure of entities, wherein a function is applied to a deterministic key to generate the public key, the deterministic key being generated by applying a hash function to either a parent entity identifier to generate a parent deterministic key, or to a sum of the parent deterministic key and a child entity identifier to generate a child deterministic key.

The key may form part of a public/private key pair. There may be one key or key pair which is designated as the "master" or "root" key/pair. Sub-entities, units or elements within an entity may be associated with sub-keys or pairs which are derived from the root. The sub-keys may be generated in a deterministic manner. The sub-key may be generated or determined substantially as described in the example provided below. A sub-key may be generated, derived or determined based on another (preceding) key. Generation of the sub-key may comprise the use of ECC techniques. A sub-key may be generated, derived or determined using a deterministic key (DK) that is based on a cryptographic hash of a message (M) or identifier. The message or identifier may be random, pseudo-random, pre-defined or selected. In a preferred embodiment, the message/identifier is selected, arranged or created to correspond to a meaningful value such as, for example, an account number, patient ID, network node identifier, company identifier etc. The message or identifier may have some meaning in relation to the entity or a sub-entity/element. The message may provide a link, association or reference to the entity or element. A sub-key may be determined based on a scalar addition of the associated public parent key and the scalar multiplication of the deterministic key and a generator (G). The message/identifier may be stored within or as metadata in a blockchain transaction (Tx). The message/identifier may be rehashed in order to provide a further sub-key.

In some embodiments of the invention, the method may include steps to associate the public addresses of the entities with the one or more identifiers of the first classification type to classify the public addresses based on the first classification type. This way, the method is able to efficiently determine transactions (Txs) that are recorded in the peer-to-peer distributed ledger (blockchain) based on the classified public addresses. As a result, the method disclosed in the present disclosure is particularly useful for any type of system in which data needs to be identified and/or extracted from transactions that have been posted to a blockchain. Examples of useful applications may include accounting and reporting on the transactions recorded in the blockchain, but it is important to note that the invention is not limited with regard to this use, application or context.

The method may further comprise:

receiving, from the communication network, a first data item associated with the first identifier;
generating a first data output based on the first account item and the first set of transactions.

For the sake of convenience and simplicity, and in a non-limiting manner, the data item may be referred to as an "accounting item" and the data output may be referred to as an "accounting report".

The method may further comprise:

receiving, from a communication network, a second accounting item associated with a second identifier of the one or more identifiers of the first classification type;
determining a second set of public addresses associated with the second identifier, wherein the second set of public addresses is a subset of the public addresses;
determining a second set of transactions in the peer-to-peer distributed ledger based on the second set of public addresses associated with the second identifier, wherein the second set of transactions is a subset of the transactions;
generating a second accounting report based on the second accounting item and the second set of transactions;
performing a first hash operation on the first accounting report to generate a first report hash representation for the first accounting report;
performing a second hash operation on the second accounting report to generate a second report hash representation for the second accounting report; and
combining the first report hash representation and the second report hash representation;
perform a third hash operation on the combined first report hash representation and second report hash representation to generate a third hash representation for the combined first report hash representation and second report hash representation.

The method may further comprise storing the third report hash representation in a storage device.

The method may further comprise:

combining the first accounting report and the second accounting report;
performing a hash operation on the combined first accounting report and second accounting report to generate a hash representation for the combined first accounting report and second accounting report.

The method may further comprise:

associating the public addresses of the entities with one or more identifiers of a second classification type to classify the public addresses based on the second classification type;
receiving, from the communication network, a third identifier of the one or more classification identifiers of the second classification type;
determining a third set of public addresses associated with the third identifier and the first identifier, wherein the third set of public addresses is a subset of the public addresses; and
determining a third set of transactions in the peer-to-peer distributed ledger based on the third set of public addresses associated with the third identifier and the first identifier, wherein the third set of transactions is a subset of the transactions.

The first classification type may represent a classification of the public addresses by identity of the entities.

The one or more identifiers of the first classification type may include one or more of the following:

names of the entities;
hexadecimal codes of the names;
network node identifier;
Australian Business Numbers of the entities; and/or
Australian Company Numbers of the entities.

The second classification type may represent a classification of the public addresses by account type of the entities.

The one or more identifiers of the second classification type may comprise any one or more of the following accounts:

credit account;
debit account;
accounts receivable;
accounts receivable;
salary account; and
interest account.

Associating the public addresses of the entities with the one or more identifiers of the first classification type may comprise:
storing, in entries of a look-up table, the one or more identifiers of the first classification type in association with the public addresses of the entities, each entry of the look-up table including one of the one or more identifiers of the first classification type and one of the public addresses.

Associating the public addresses of the entities with the one or more identifiers of the first classification type may comprise:
using a script to associate the one or more identifiers of the first classification type with the public addresses in the peer-to-peer distributed ledger.

The first classification type may represent a classification of the public addresses by a tree structure that links the entities.

The one or more identifiers of the first classification type may comprise deterministic keys associated the entities. wherein the deterministic keys are generated based on the tree structure.

The entities may include a parent entity and a child entity associated with the parent entity in the tree structure, wherein

the parent entity is associated with a first deterministic key of the deterministic keys, and the child entity is associated with a second deterministic key of the deterministic keys, and
the first deterministic key is determined based on a parent indication associated with the parent entity, and the second deterministic key is determined based on the first deterministic key and a child indication associated with the child entity.

The method may further comprise:

receiving the parent indication from the communication network;
determining the first deterministic key based on the parent indication;
determining the second deterministic key based on the first deterministic key and the child indication;
determining a fourth set of public addresses associated with the second deterministic key, wherein the fourth set of public addresses is a subset of the public addresses;
determining a fourth set of transactions in the peer-to-peer distributed ledger based on the fourth set of public addresses associated with the second deterministic key, wherein the fourth set of transactions is a subset of the transactions; and
generating a third accounting report based on the fourth set of transactions.

Determining the fourth set of public addresses may further comprise determining the fourth set of public addresses based on the second deterministic key.

The public addresses may comprise public keys of asymmetric cryptography pairs, each of the asymmetric cryptography pairs including one of the public keys and a private key corresponding to the one of the public keys.

The peer-to-peer distributed ledger may be a blockchain generated in accordance with a Bitcoin protocol.

The public addresses may comprise Bitcoin addresses of the entities used in the Bitcoin protocol.

There is provided a computer software program, including machine-readable instructions, when executed by a processor, causes the processor to perform any one of the methods as described above.

There is provided a computer system for efficient determination of transactions with entities, the transactions being recorded in a peer-to-peer distributed ledger, the computer system comprising:
a processor configured to

associate public addresses of the entities with one or more identifiers of a first classification type to classify the public addresses based on the first classification type;

receive, from a communication network, a first identifier of the one or more identifiers of the first classification type;

determine a first set of public addresses associated with the first identifier, wherein the first set of public addresses is a subset of the public addresses; and

determine a first set of transactions in the peer-to-peer distributed ledger based on the first set of public addresses associated with the first identifier, wherein the first set of transaction is a subset of the transactions.

The invention may provide a method of generating public keys for a linked or associated structure of entities. It may comprise the step of:

applying a function to a deterministic key to generate a public key, the deterministic key being generated by applying a hash function to either a parent entity identifier to generate a parent deterministic key, or to a sum of the parent deterministic key and a child entity identifier to generate a child deterministic key. This method may further comprise any feature(s) described above.

Any feature mentioned above in respect of a method of the invention may be applicable to a corresponding system, and vice versa.

## Brief Description of Drawings

Features of the present disclosure are illustrated by way of non-limiting examples, and like numerals indicate like elements, in which:

Fig. 1 illustrates a cryptocurrency system including an accounting server in accordance with the present disclosure;

Fig. 2 illustrates a computer-implemented method for efficient determination of transactions on a peer-to-peer distributed ledger in accordance with the present disclosure;

Figs. 3(a) illustrates an example of associating public addresses of entities with identifiers of a classification type in accordance with the present disclosure;

Figs. 3(b) illustrates an example of associating public addresses of the entities with identifiers of more than one classification type in accordance with the present disclosure;

Figs. 4(a) and 4(b) illustrate an example application of the present disclosure to an entity network configured in a tree structure; and

Fig. 5 illustrates an example schematic diagram of a computer system used to implement methods described in the present disclosure.

## Description of Embodiments

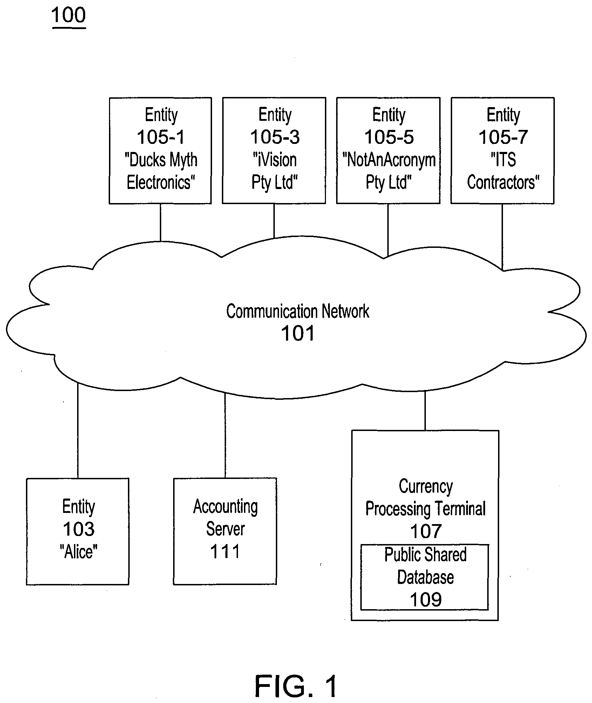

Fig. 1 illustrates a cryptocurrency system 100 including a server 111 in accordance with the present disclosure. In this example, the server is an accounting server but in other embodiments the server could be arranged for other types of purpose or functionality.

The cryptocurrency system 100 provides a platform for entities 103, 105-1 to 105-7 to send and receive cryptocurrency. Entities 103, 105-1 to 105-7 are connected to each other by a communication network 101. The cryptocurrency system 100 in the present disclosure uses a peer-to-peer distributed ledger (i.e. blockchain) 109 to record transactions (Txs) conducted over the cryptocurrency system 100. A copy of the (i.e. blockchain) 109 is stored on a currency processing terminal 107. Although there is only one currency processing terminal 107 shown in Fig. 1, there may be more than one currency processing terminals 107 in the cryptocurrency system 100 without departing from the scope of the present disclosure.

The cryptocurrency system 100 in the present disclosure is described as a Bitcoin system 100 using a blockchain for description purposes. In another example, the cryptocurrency system 100 can be other cryptocurrency platforms, for example, Ethereum. Further, although the cryptocurrency system 100 and methods in the present disclosure are described in the context of accounting and reporting on the transactions recorded in the (i.e. blockchain) 109, the cryptocurrency system 100 and these methods can be used in different ways. The invention is not limited to use for accounting purposes.

In the Bitcoin system 100, one or more transactions (Txs) may be conducted between entity 103 and entities 105-1 to 105-7. For example, a certain number of bitcoins (BTC) are transferred from entity 103 to entity 105-1. Transactions are defined and processed according to Bitcoin protocols. An example Bitcoin transaction (Tx) is shown in Table 1 below.

```
{
  "hash":"f4184fc596403b9d638783cf57adfe4c75c605f6356fbc91338530e9
831e9e16",
  "ver":1,
  "vin_sz":1,
  "vout_sz":2,
  "lock_time":0,
  "size":275,
  "in":[
    {
      "prev_out":{
        "hash":"0437cd7f8525ceed2324359c2d0ba26006d92d856a9c20fa0241
106ee5a597c9",
        "n":0
      },
      "scr4iptSig": "304402204e45e16932b8af514961a1d3a1 a25fdf3f4f7732e9
d624c6c61548ab5fb8cd410220181522ec8eca07de4860a4acdd12909d831cc
56cbbac4622082221a8768d1d0901"
    }
  ],
  "out":[
    {
      "value":" 10.00000000",
      "scriptPubKey":"04ae1a62fe09c5f51b13905f07f06b99a2f7159b2225f3
74cd378d71302fa28414e7aab37397f554a7df5f142c21c1b7303b8a0626f1b
aded5c72a704f7e6cd84c OP_CHECKSIG"
    },
    {
      "value":"40.00000000",
      "scriptPubKey":"0411db93e1dcdb8a016b49840f8c53bcleb68a382e97b
1482ecad7b148a6909a5cb2e0eaddfb84ccf9744464f82e160bfa9b8b64f9d4c
03f999b8643f656b412a3 OP_CHECKSIG"
    }
  ]
}
```

Table 1: Example Bitcoin transaction

The above transaction in Table 1 is a data structure which is arranged in accordance with the blockchain protocol, and includes a plurality of fields and scripts. These fields and scripts contain information and commands used by the currency processing terminal 107 to implement a Bitcoin transaction (Tx). It should be noted that transactions may have different fields and scripts for different purposes.

A transaction (Tx) typically contains a brief description of the transaction, including, for example, a hash value of the transaction, a version number of the Bitcoin protocol, the number of inputs, the number of outputs, the size of the transaction, etc.

The "Input" field ("In") contains a reference to a previous transaction ("prev_out") from which the bitcoins are received. And the "Output" field ("Out") contains the number of the bitcoins ("value") to be sent to a public address or a Bitcoin address used by an entity, and the public address or a Bitcoin address (contained in "scriptPubKey") that the bitcoins are sent to. In the example shown in Table 1, bitcoins received from a previous transaction "0437cd7f8525ce ed2324359c2d0ba26006d92d856a9c20fa0241106ee5a597c9" are sent to two public addresses.

The above transaction is transferred to the currency processing terminal 107, which may also be referred to as a "miner" in Bitcoin protocols. The currency processing terminal 107 groups a certain number (i.e, a block) of transactions that happened in the past, and verifies these transactions using a proof of work mechanism.

Once the block is verified, the verified block is combined with other blocks that have been verified previously. These blocks constitute the peer-to-peer distributed ledger 109, referred to as a "blockchain" in Bitcoin or Ethereum protocols. A copy of the blockchain 109 is stored on the currency processing terminal 107, and can be accessed by the public. Transactions that are recorded in the blockchain of a Bitcoin system may be found at, for example, https:// blockchain-info.

As known in relation to the Bitcoin protocol, an address is a hashed version of a cryptographic public key. The public key forms part of a public/private key pair and so every address is linked to a private key that is owned by or associated with an entity (human, logical virtual or computer based entity).

It should be noted that in the cryptocurrency system 100 operating according to Bitcoin protocols in which a blockchain is used, entities 105-1 to 105-7 receiving bitcoins may have multiple public or Bitcoin addresses to receive bitcoins from entity 103. On the other hand, entity 103 may have multiple public or Bitcoin addresses to receive bitcoins from entities 105-1 to 105-7. Therefore, it is difficult to identify the transactions associated with a certain classification. For example, it is difficult to identify the transactions associated with a particular entity by accessing the blockchain. Further, it is also difficult to identify transactions associated with a particular account type (e.g., debit account, credit account, etc.). This results in difficulties in using data stored on a blockchain for off-block purposes. For example, if an organisation wishes to utilise a blockchain platform for currency transfer purposes in order to harness the advantages provided by blockchain-implemented technologies, they may need to import the relevant data from the blockchain into an internal system such as a database on a server for further storage and/or processing. This data extraction process becomes a difficult technical task because of the problems in identifying the relevant blockchain transactions (Tx) as explained above. For example, it becomes difficult to use the data for, say, accounting, communicating, processing or reporting on transactions which have been recorded in the blockchain 109.

In this example, for the sake of simplicity, we will discuss the use of an embodiment of the invention for accounting reports. An accounting report is used in the present disclosure to report on the transactions that have been recorded in the blockchain. The accounting report includes one or more accounting items. An account item can take different forms. Essentially, an account item represents a question to be answered. For example, an accounting item may represent a question of "how many transactions have been conducted with entity 105-1?". The answer to this question is a value representing the number of transactions with entity 105-1.

Accounting items to be included in an accounting report may be presented on a user interface for a user associated with an entity to select. For example, the accounting items are presented on a computer screen of a computer that the user is using. The user selects one or more of the accounting items to be included in the accounting report using an input device (e.g., a keyboard , a pointing device, or a touch screen) associated with the computer. Once the accounting items are selected by the user, these accounting items are sent to the accounting server 111 over a communication network 101. Subsequently, a method as described below is performed on the accounting server 111 to calculate values that correspond to the selected one or more of the accounting items.

The accounting server 111 further generates the accounting report by incorporating the selected one or more of the accounting items and the corresponding values into an electronic file. Particularly, the accounting report can be an electronic spreadsheet including the selected one or more of the accounting items and the corresponding values. The accounting reporting generated may be stored in a storage device or sent to the computer the user is using or another computer that user designated beforehand.

Example accounting items that may be selected by an user associated with entity 103 are shown in Table 2. These accounting items include accounting items 1 to 5 in relation to entity 105-1 ("Ducks Myth Electronics") that entity 103 conducts transactions with.

Table 2: Example Accounting Items

| 1. The number of transactions with entity 105-1 |
| --- |
| 2. The number of payments received from entity 105-1 |
| 3. Total payment received from entity 105-1 |
| 4. The number of payments made to entity 105-1 |
| 5. Total payment made to entity 105-1 |

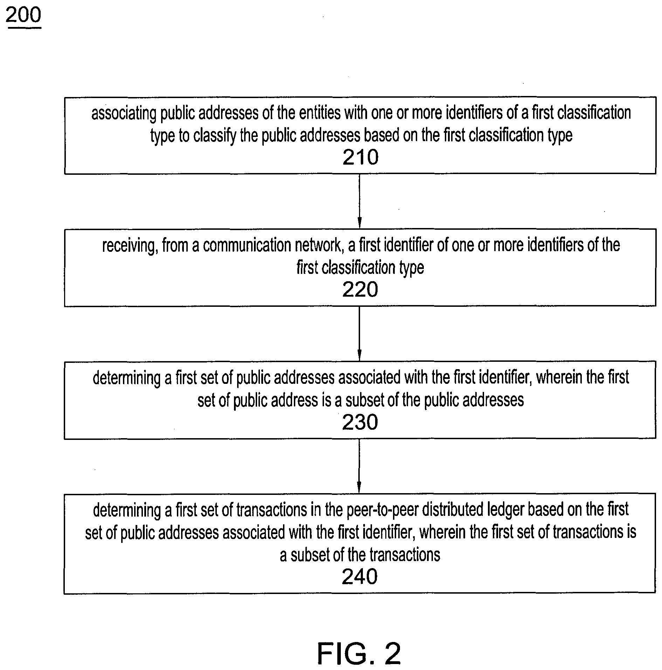

Fig. 2 illustrates a computer-implemented method 200 for efficient determination of transactions with entities in accordance with the present disclosure. The transactions are conducted via the cryptocurrency system 100 and recorded in the blockchain 109.

In this example, method 200 is implemented on the accounting server 111 to account on the transactions associated with entity 103.

Specifically, method 200 associates 210 public addresses of the entities 105-1 to 105-7 with one or more identifiers of a first classification type to classify the public addresses based on the first classification type.

The first classification type represents a classification of the public addresses in a certain way. The first classification type in this example represents a classification of the public addresses by identity of the entities 103, 105-1 to 105-7. Accordingly, the one or more identifiers of the first classification type indicate specific identities of the entities 103, 105-1 to 105-7. The identify of an entity in the presented disclosure may be represented by a name of the entity, or a hexadecimal code of the name that is converted from the name of the entity. As shown in Fig. 1, for example, the name of entity 103 is "Alice", and the name of entity 105-1 is "Ducks Myth Electronics". In other examples, identity of an entity can also be represented by an Australian Business Number (ABN), an Australian Company Number (ACN), or an internal alphanumeric client identifier such as "ABC14114800389".

In other examples, the public addresses may be classified in different ways. For example, the public addresses can be classified by account type of the entities. Accordingly, the one or more identifiers of the first classification type indicate specific account types associated with the public addresses, including any one or more of the following accounts: credit account, debit account, accounts receivable, accounts payable, salary account, and interest account. The identifiers may indicate other types of accounts without departing from the scope of the present disclosure.

As an example, entity 103 conducts a transaction with entity 105-1 and the name of entity 105-1 is "Ducks Myth Electronics". Method 200 associates the name of entity 105-1 with this transaction.

Once the association is established, method 200 uses the association to account on the transactions. For example, a user associated with entity 103, using an input device associated with his or her computer, selects accounting item 1 (e.g., "The number of transactions with entity 105-1") associated with the first identifier (i.e., "Ducks Myth Electronics"). The selected accounting item 1 is sent to the accounting server 111 over the communication network 101.

At the accounting server 111, method 200 receives 220 from the communication network 101 the first identifier ("Ducks Myth Electronics"). Particularly, method 200 receives, from the communication network 101, accounting item 1 associated with the first identifier ("Ducks Myth Electronics");

Method 200 further determines 230 a first set of public addresses associated with the first identifier ("Ducks Myth Electronics") from the association established in step 210, wherein the first set of public address is a subset of the public addresses. Specifically, method 200 searches the association by the first identifier ("Ducks Myth Electronics") to determine the first set of public addresses associated with the first identifier ("Ducks Myth Electronics"). As a result, the first set of public addresses that are used by "Ducks Myth Electronics" is determined.

Method 200 further determines 240 a first set of transactions in the peer-to-peer distributed ledger 109 (particularly, the blockchain 109 in this example) based on the first set of public addresses associated with the first identifier ("Ducks Myth Electronics"), wherein the first set of transactions is a subset of the transactions recorded in the blockchain 109. For example, method 200 downloads the blockchain 109 from the currency processing terminal 107 and searches the blockchain 109 for transactions having any one of the first set of public addresses used by "Ducks Myth Electronics". As a result, all the transactions that are conducted with "Ducks Myth Electronics" are determined.

Based on accounting item 1 ("The number of transactions with entity 105-1") and the first set of transactions determined above, method 200 generates a first accounting report. For example, method 200 determines a corresponding value indicating the number of transactions with entity 105-1 ("Ducks Myth Electronics") by counting the number of transactions in the first set of transactions. Further, method 200 generates the first accounting report by creating an electronic spreadsheet including accounting item 1 ("The number of transactions with entity 105-1") and their corresponding value.

The user may select multiple accounting items. In this case, method 200 repeats steps 210 to 240 and, generate an accounting report including these accounting items and corresponding values. An example accounting report is shown in Table 3 below:

Table 3: Example Accounting Report

| Accounting Items | Value |
|---|---|
| The number of transactions with "Ducks Myth Electronics" | 2 |
| Total payment made to "Ducks Myth Electronics" | $15,000 |
| The number of transactions with "iVision Pty Ltd" | 1 |
| Total payment made to "iVision Pty Ltd" | $1,000 |

As can be seen from the above, based on different accounting items, method 200 can generate different accounting reports for accounting purposes, including a Balance Sheet, an Income Statement, an Inventory Report, a Shipping and Receiving Report, a Custom Report, a Billing and Paying Report, and even other reports for purposes other than accounting purposes without departing from the scope of the present disclosure. An example Balance Sheet and an example Income Statement are shown in Table 4 and Table 5, respectively.

Table 4: Example Balance Sheet

| Assets | Value | Liabilities | Value |
|---|---|---|---|
| Inventory | $50,000 | Accounts Payable | $30,000 |
| Cash | $40,000 | | |
| Total Assets | $90,000 | Total Liabilities | $30,000 |

Table 5: Example Income Statement

| Income | Value |
|---|---|
| Gross Sales | $400,000 |
| Discounts | $5,000 |
| Net Revenue | $395,000 |
| Cost of Sales | $200,000 |
| Gross Profit | $195,000 |
| Operating Expense | $60,000 |
| Operating Income | $135,000 |
| Tax Expense | $20,000 |
| Net Profit | $115,000 |

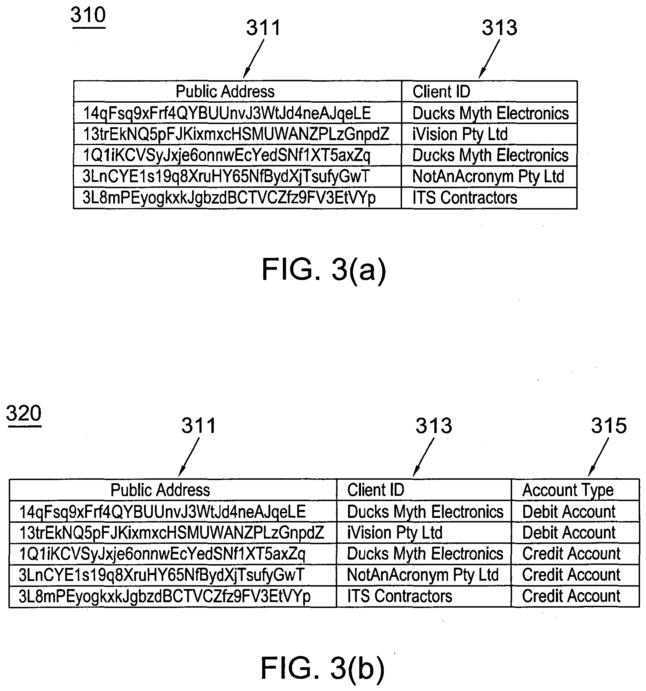

Fig. 3(a) illustrates an example of associating public addresses of the entities with identifiers of a classification type in accordance with the present disclosure.

In the example shown in Fig. 3(a), a look-up table 310 is used to associate public addresses of the entities with identifiers of a classification type. Each entry of the look-up table 310 includes two fields, a "Public Address" field 311 and a "Client ID" field 313. The value of the "Public Address" field 311 of an entry indicates a specific public address used in a transaction, and the value of the "Client ID" field 313 of an entry indicates the specific identity of the entity associated with the public address. It should be noted that, in another example, the "Client ID" field 313 may be replaced with a different classification type, for example, account type, to classify a public address by account type associated with the public address.

A transaction in relation to entity 103 occurs with an entity using a public address that is not stored in the look-up table 310, method 200 adds an entry to the look-up table 310. For example, a payment is made from entity 103 to a public address used by entity 105-1 ("Ducks Myth Electronics") that is not stored in the look-up table 310, method 200 adds an entry to the look-up table 310 and stores an identifier of entity 105-1 ("Ducks Myth Electronics") in the entry of the look-up table 310 in association with the public address used by entity 105-1 ("Ducks Myth Electronics"), as shown in the first entry and the third entry of the look-up table 310. As a result, each entry of the look-up table 310 associates one of the identifiers of a certain classification type and one of the public addresses by including them in the entry.

In this case, if an accounting item associated with entity 105-1 ("Ducks Myth Electronics") is selected by a user, and the accounting item is sent to the accounting server 111 over the communication network 101, method 200 searches the look-up table 310 for entries having "Ducks Myth Electronics" in the "Client ID" field 313 to determine the first set of public addresses used by "Ducks Myth Electronics" (i.e., entity 105-1). In this example, the first set of public addresses determined in this example includes the public addresses contained in the first entry and the third entry of the look-up table 310.

Further, method 200 determines the first set of transactions in the peer-to-peer distributed ledger 109 (particularly, the blockchain 109) based on the first set of public addresses associated with entity 105-1 ("Ducks Myth Electronics"), as described above with reference to step 240. Therefore, the first set of transactions that are conducted with "Ducks Myth Electronics" are determined. Method 200 may further generate the first accounting report based on the first set of transactions, as described above. The first accounting report is sent from the accounting server 111 to the computer that the user is using or a computer that the user designated beforehand, and displayed on the screen of the computer for the user or a third-party to review.

In another example, the user further selects a second accounting item (for example, "the number of transactions with entity 105-3") associated with a second identifier ("iVision Pty Ltd", i.e., entity 105-3) of the first classification type. The user sends the second accounting item to the accounting server 111 over the communication network 101.

Method 200 receives, from the communication network 101, the second accounting item associated with the second identifier ("iVision Pty Ltd") of the first classification type. Method 200 further determines a second set of public addresses associated with the second identifier ("iVision Pty Ltd"), wherein the second set of public addresses is a subset of the public addresses. Particularly, method 200 searches the look-up table 310 for entries having "iVision Pty Ltd" in the "Client ID" field 313 to determine the second set of public addresses used by "iVision Pty Ltd" (i.e., entity 105-3). The second set of public addresses determined in this example includes the public address contained in the second entry of the look-up table 310.

Method 200 then determines a second set of transactions in the blockchain 109 based on the second set of public addresses associated with the second identifier ("iVision Pty Ltd"), wherein the second set of transactions is a subset of the transactions in the blockchain 109.

Method 200 further generates a second accounting report based on the second accounting item and the second set of transactions, as described above.

Method 200 further performs a first hash operation on the first accounting report as generated above to generate a first report hash representation for the first accounting report, and performs a second hash operation on the second accounting report to generate a second report hash representation for the second accounting report. Method 200 combines the first report hash representation and the second report hash representation. Method further performs a third hash operation on the combined first report hash representation and second report hash representation to generate a third hash representation for the combined first report hash representation and second report hash representation. This way, the first report hash representation and second report hash representation are consolidated into a single hash representation.

In another example, method 200 combines the first accounting report and the second accounting report, and performs a hash operation on the combined first accounting report and second accounting report to generate a hash representation for the combined first accounting report and second accounting report.

The look-up table 310 may include an additional field (referred to as a second classification type hereinafter) to classify the public addresses of the entities by two classification types. This way a public address associated with an entity is classified by both the identity of the entity and the account type associated with the public address. Further, a public address may be classified by even more classification types without departing from the scope of the present disclosure.

Fig. 3(b) illustrates an example of associating public addresses of the entities with identifiers of more than one classification types in accordance with the present disclosure.

In the example shown in Fig. 3(b), each entry of the look-up table 320 includes a further "Account Type" field 315 (i.e., the second classification type) in addition to the "Public Address" field 311 and the "Client ID" field 313 (i.e., the first classification type as described above) in order to further classify a public address based on the account type associated with the public address. The identifiers for account type represent specific account types, including one or more of credit account, debit account, accounts receivable, accounts payable, salary account, and interest account. The identifiers may represent other types of accounts without departing from the present disclosure.

In this case, if a payment is made from entity 103 to a public address used by entity 105-1 ("Ducks Myth Electronics"), in addition to storing the identity identifier of entity 105-1 ("Ducks Myth Electronics") in a new entry of the look-up table 320 in association with the public address used by entity 105-1 ("Ducks Myth Electronics"), as described above with reference to Fig. 3(a), method 200 further associates the public address with a specific account type associated with the public address to classify the public addresses by account type. As shown in the first entry of the look-up table 320, the public address in the first entry is further associated with a "Debit Account", and the public address in the third entry is further associated with a "Credit Account".

The user selects a third accounting item (for example, "the number of transactions on credit account with entity 105-1") associated with the first identifier ("Ducks Myth Electronics", i.e., entity 105-1) of the first classification type (i.e., identity of the entity) and a third identifier ("Credit Account") of the second classification type (i.e., account type associated with the public address). The user sends the third accounting item to the accounting server 111 over the communication network 101.

Method 200 receives, from the communication network 101, the third accounting item associated with the first identifier ("Ducks Myth Electronics") of the first classification type and the third identifier ("Credit Account") of the second classification type. Method 200 further determines a third set of public addresses associated with the third identifier ("Credit Account") and the first identifier ("Ducks Myth Electronics"), wherein the third set of public addresses is a subset of the public addresses. In the example shown in Fig. 3(b), method 200 searches the look-up table 320 for entries having both "Ducks Myth Electronics" in the "Client ID" field 313 and "Credit Account" in the "Account Type" field 315 to determine the third set of public addresses used by "Ducks Myth Electronics" (i.e., entity 105-1) on a credit account. As shown in Fig. 3(b), the third set of public addresses determined in this example only includes the public address contained in the third entry of the look-up table 320.

Method 200 further determines a third set of transactions in the peer-to-peer distributed ledger 109 (particularly, the blockchain 109) based on the third set of public addresses, wherein the third set of transactions is a subset of the transactions. Method 200 may further generate a further accounting report based on the third set of transactions and store the further accounting report in a storage device, as described above.

It should be noted that the entries shown in the look-up table 310 or 320 may represent part of the transactions conducted in relation to entity 103, and the look-up table 310 or 320 may include more entries in other examples.

A further example of associating public addresses of the entities with identifiers of a classification type in accordance with the present disclosure is described below.

In this example, if a payment is made from entity 103 to a public address used by entity 105-1 ("Ducks Myth Electronics"), method 200 associates the public address used by entity 105-1 with the identity identifier ("Ducks Myth Electronics") of entity 105-1 in the transaction itself. For example, method 200 uses a script in the transaction to associate the public address used by entity 105-1 with the identity identifier ("Ducks Myth Electronics") of entity 105-1 in the blockchain 109.

In this case, if an accounting item associated with entity 105-1 ("Ducks Myth Electronics") is selected by a user, and the accounting item is sent to the accounting server 111 over the communication network 101. Method 200 searches the blockchain 109 for transactions that match the public address used by "Ducks Myth Electronics" to determine the transactions in the blockchain 109 that are conducted with "Ducks Myth Electronics". Method 200 may further generate an accounting report based on the transactions determined above. Method 200 may further store the accounting report in a storage device.

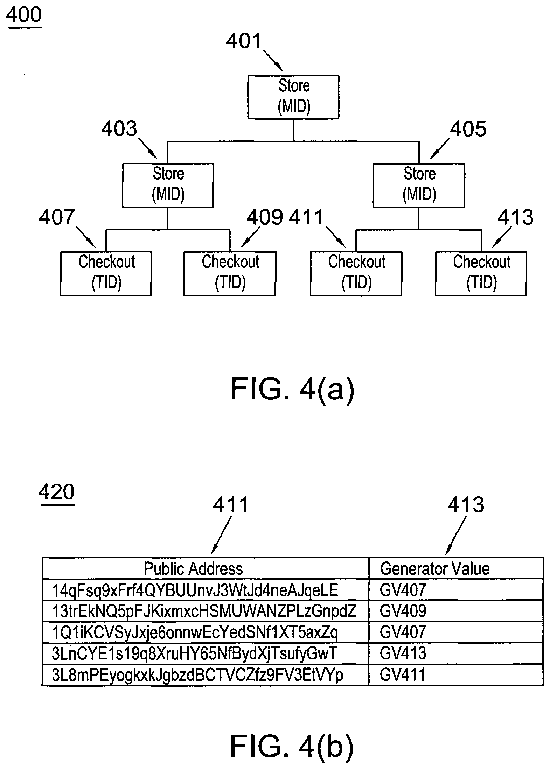

Figs. 4(a) and 4(b) illustrate an example application of the present disclosure to an entity network configured in a tree structure.

In the example application shown in Fig. 4(a), an entity network 400 includes multiple entities 401 to 413 that are configured in a tree structure. Although the entity network 400 are shown in Fig. 4(a) to represent a retailers network that are traditionally structured in a tree structure, the entity network 400 may represent other entity networks without departing from the scope of the present disclosure.

In order to classify the public addresses associated with checkout terminals 407 to 413 that are configured in the tree structure shown in Fig. 4(a), a classification type called "Deterministic Key" is introduced in this example, shown as the "Deterministic Key" field 413 in the look-up table 420 in Fig. 4(b). Accordingly, identifiers for this classification type represent specific deterministic keys associated with each of entities 401 to 413 that are linked by the tree structure.

As shown in Fig. 4(a), the stores and checkout terminals 401 to 413 in the retailers network 400 are configured in a tree structure. Specifically, entity or store 401 is at the top of the tree and has two child entities or stores 403 and 405. Child entity or store 403 is also a parent entity of child entities 407 and 409, which are checkout terminals installed in store 403 or associated with store 403. Similarly, child entity or store 405 is also a parent entity of child entities 411 and 413, which are checkout terminals installed in store 405 or associated with store 405. Each of stores 401 to 405 has an associated merchant indication (MID) (for example, the name of the store), and each of checkout terminals 407 to 413 has an associated terminal indication (TID) (for example, a manufacturer identification number assigned to the checkout terminal). Transactions are conducted at checkout terminals 407 to 413 using public addresses associated with checkout terminals 407 to 413.

Deterministic keys associated with entities 401 to 413 are determined in a way the deterministic keys are mapped to entities 401 to 413 deterministically. Specifically, the deterministic key associated with root entity or store 401 is based on the MID associated with root entity or store 401. For example, the deterministic key associated with root entity or store 401 can be determined by performing a set of cryptographic functions based on the MID associated with root entity 401,. An example of generating the generator value ("GV401") associated with root entity 401 using a cryptographic hash algorithm SHA-256 based on the **MID** ("MID401") associated with root entity 401 is shown below

$$GV401 = SHA\text{-}256(MID401) \qquad\qquad (Equation\text{-}1)$$

For child entities or stores 403 and 405, the deterministic key (for example, "GV403" for store 403 or "GV405" for store 405) associated with each of child entities or stores 403 and 405 is determined based on the deterministic key (i.e., "GV401") associated with its parent entity 401 (in this case, root entity 401) and its own MID (for example, "MID403" for store 403 or "MID405" for store 405). For example,

$$GV403 = SHA\text{-}256(GV401+MID403) \qquad\qquad (Equation\text{-}2)$$

$$GV405 = SHA\text{-}256(GV401+MID405) \qquad\qquad (Equation\text{-}3)$$

For checkout terminals 407 and 409, the deterministic key (for example, "GV407" for checkout terminal 407, or "GV409" for checkout terminal 409) associated with each of checkout terminals 407 and 409 is determined based on the deterministic key associated (i.e., "GV403") with its parent entity 403 and its own TID (for example, "TID407" for checkout terminal 407 or "TID409" for checkout terminal 409). Similarly, for checkout terminals 411 and 413, the deterministic key (for example, "GV411" for checkout terminal 411, "GV413" for checkout terminal 413) associated with each of checkout terminals 411 and 413 is determined based on the deterministic key (i.e., "GV405") associated with its parent entity 405 and its own TID (for example, "TID411" for checkout terminal 411 or "TID413" for checkout terminal 413). For example,

$$GV407 = SHA\text{-}256(GV403+TID407) \qquad\qquad (Equation\text{-}4)$$

$$GV409 = SHA\text{-}256(GV403+TID409) \qquad \text{(Equation-5)}$$

$$GV411 = SHA\text{-}256(GV405+TID411) \qquad \text{(Equation-6)}$$

$$GV413 = SHA\text{-}256(GV405+TID413) \qquad \text{(Equation-7)}$$

Further, these deterministic key are used to derive respective public addresses used by stores 401 to 405 and checkout terminals 407 to 413. For example,

$$public\ address = F\,(deterministic\ key) \qquad \text{(Equation-8)}$$

wherein F() is a function that generates a public address based on a deterministic key.

A transaction in relation to a checkout terminal (for example, checkout terminal 407) occurs, method 200 may add an entry to the look-up table 420. For example, a payment is made from a customer to a public address used by checkout terminal 407, which is derived from the deterministic key associated with checkout 407. If the public address used by checkout terminal 407 is not stored in the look-up table 420, method 200 adds a new entry to the look-up table 420 and stores the deterministic key (i.e., "GV407") associated with checkout terminal 407 in the new entry of the look-up table 420 in association with the public address used by checkout terminal 407, as shown in the first entry and the third entry of the look-up table 420. In other examples, the deterministic key associated with checkout terminal 407 is already stored in an entry of the look-up table 420 before the transaction occurs. In this case, the method 200 stores the public address used by checkout terminal 407 in the entry in which the deterministic key is stored to associate the public address with the deterministic key. As a result, each entry of the look-up table 420 includes the deterministic key associated with one of checkout terminals 407 to 413 and one of the public addresses that is used by the one of checkout terminals 407 to 413.

At close of a business day, the store manager of store 403 may want to have an accounting report for store 403. The store manager selects an accounting item (for example, "the number of transactions with store 403") associated with store 403 by for example inputting the MID associated with store 403. In this example, the accounting item and the MID associated with store 403 are sent to the accounting server 111 over the communication network 101.

Method 200 receives the MID and the accounting item associated with store 403 from the communication network 101. Method 200 determines a first deterministic key associated with store 403 based on the MID associated with the store 403 if store 403 is a root store. If store 403 is not a root store, the first deterministic key may be determined based on the deterministic key associated with the parent store 401 and the MID associated with store 403. Method 200 further determines the deterministic keys (e.g., "GV407", "GV409") associated with child entities or checkout terminals 407 and 409 of store 403 based on the first deterministic key and the respective TIDs of checkout terminals 407 and 409.

By searching the look-up table 420 for entries having any one of the deterministic keys "GV407" and "GV409" associated with checkout terminal 407 and 409 in the "Deterministic Key" field 413, method 200 determines a fourth set of public addresses associated with the deterministic keys "GV407" and "GV409", wherein the fourth set of public addresses is a subset of the public addresses. As shown in Fig. 4(b), the fourth set of public addresses determined above includes the public addresses contained in the "Public Address" field 411 of the first three entries of the look-up table 420.

Method 200 further determines a fourth set of transactions in the blockchain 109 based on the fourth set of public addresses as described above, wherein the fourth set of transactions is a subset of the transactions. Method 200 further generates a third accounting report based on the fourth set of transactions as described above. Method 200 may also store the third accounting report in a storage device.

Since the public addresses used by stores 401 to 405 and checkout terminals 407 to 413 are derived from their respective deterministic keys, method 200 can determine the fourth set of public addresses by applying the deterministic keys associated with checkout terminals 407 to 413 to (Equation-8) without searching the look-up table 420.

It should be noted that, in the present disclosure, the public addresses include public keys of asymmetric cryptography pairs, each of the asymmetric cryptography pairs including one of the public keys and a private key corresponding to the one of the public keys. Each of the asymmetric cryptography pairs may be generated based on the Elliptic Curve Cryptography (ECC) algorithm.

Further, in a Bitcoin system, the public addresses are Bitcoin addresses of the entities used in Bitcoin protocols.

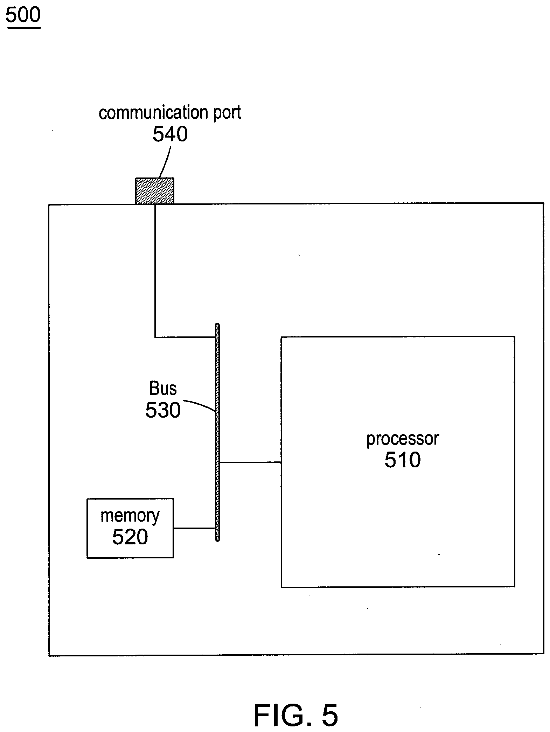

Fig. 5 illustrates an example schematic diagram of a computer system 500 used to implement the methods described. The computer system 500 can be an example of the accounting server 111.

The computer system 500 includes a processor 510, a memory device 520, a bus 530, and a communication interface 540. The processor 510, the memory device 520, and the communication interface 540 are connected via the bus 530 to communicate with each other. The communication interface 540 of the computer system 500 is used to connect the computer system 500 to the communication network 101, as shown in Fig. 1. The communication interface 540 may be an Internet interface, a WLAN interface, a cellular telephone network interface, a Public Switch Telephone Network (PSTN) interface, and an optical communication network interface, or any other suitable communication interface.

The processor 510 performs machine executable instructions stored in the memory 520 to implement the example methods described above with reference to Figs. 1 to 4(b). The machine executable instructions are included in a computer software program. The computer software program resides in the memory device 520 in this example. In other examples, the computer software program is stored in a computer readable medium that is not part of the computer system 500, and is read into the memory device 520 from the computer readable medium. Specifically, the processor 510 is configured to:

associate public addresses of the entities with one or more identifiers of a first classification type to classify the public addresses based on the first classification type;

receive, from a communication network, a first identifier of the one or more identifiers of the first classification type;

determine a first set of public addresses associated with the first identifier, wherein the first set of public addresses is a subset of the public addresses; and

determine a first set of transactions in the peer-to-peer distributed ledger based on the first set of public addresses associated with the first identifier, wherein the first set of transaction is a subset of the transactions.

It should be understood that the example methods of the present disclosure might be implemented using a variety of technologies. For example, the methods described herein may be implemented by a series of machine executable instructions residing on a suitable computer readable medium. Suitable computer readable media may include volatile (e.g. RAM) and/or non-volatile (e.g. ROM, disk) memory, carrier waves and transmission media. Exemplary carrier waves may take the form of electrical, electromagnetic or optical signals conveying digital data steams along a local network or a publically accessible network such as internet.

It should also be understood that, unless specifically stated otherwise as apparent from the following discussion, it is appreciated that throughout the description, discussions utilizing terms such as "determining", "obtaining", or "receiving" or "sending" or "generating" or the like, refer to the action and processes of a computer system, or similar electronic computing device, that processes and transforms data represented as physical (electronic) quantities within the computer system's registers and memories into other data similarly represented as physical quantities within the computer system memories or registers or other such information storage, transmission or display devices.

## Claims

1. A computer-implemented method (200) comprising:

   associating (210) each address of a plurality of public addresses of a plurality of entities with a corresponding identifier from a plurality of identifiers of a first classification type to classify the public addresses based on the first classification type;

   receiving (220), from a communication network (101), a first identifier of the identifiers of the first classification type, the first identifier identifying an entity of the plurality of entities, wherein the first classification type represents a classification of the public addresses by identities of the entities using a tree structure that links the entities, wherein the identifiers of the first classification type comprise deterministic keys associated with the entities, wherein the deterministic keys are generated based on the tree structure;

   determining (230) a first set of public addresses associated with the first identifier to determine a first set of public addresses used by the entity, wherein the first set of public addresses is a subset of the public addresses; and

   identifying (240) a first set of transactions in a blockchain (109) based on the first set of public addresses associated with the first identifier by searching the blockchain for transactions having one of the first set of public addresses used by the entity, wherein the entities include a parent entity and a child entity associated with the parent entity in the tree structure, wherein

   the parent entity is associated with a first deterministic key of the deterministic keys, and the child entity is associated with a second deterministic key of the deterministic keys, and

   the first deterministic key is determined based on a parent indication associated with the parent entity, and the second deterministic key is determined based on the first deterministic key and a child indication associated with the child entity.

2. The computer-implemented method of claim 1, further comprising:

   receiving, from the communication network, a first data item associated with the first identifier;

generating a first data output based on the first data item and the first set of transactions.

3. The computer-implemented method of claim 2, further comprising:

receiving, from a communication network, a second data item associated with a second identifier of the one or more identifiers of the first classification type;
determining a second set of public addresses associated with the second identifier, wherein the second set of public addresses is a subset of the public addresses;
determining a second set of transactions in the blockchain based on the second set of public addresses associated with the second identifier, wherein the second set of transactions is a subset of the transactions;
generating a second data output based on the second data item and the second set of transactions;
performing a first hash operation on the first data output to generate a first output hash representation for the first data output;
performing a second hash operation on the second data output to generate a second output hash representation for the second data output; and
combining the first output hash representation and the second output hash representation;
perform a third hash operation on the combined first output hash representation and second output hash representation to generate a third hash representation for the combined first output hash representation and second output hash representation.

4. The computer-implemented method of claim 3, further comprising storing the third output hash representation in a storage device.

5. The computer-implemented method of claim 3, further comprising:

combining the first data output and the second data output;
performing a hash operation on the combined first data output and second data output to generate a hash representation for the combined first data output and second data output.

6. The computer-implemented method of any one of the preceding claims, further comprising:

associating the public addresses of the entities with one or more identifiers of a second classification type to classify the public addresses based on the second classification type;
receiving, from the communication network, a third identifier of the one or more classification identifiers of the second classification type;
determining a third set of public addresses associated with the third identifier and the first identifier, wherein the third set of public addresses is a subset of the public addresses; and
determining a third set of transactions in the blockchain based on the third set of public addresses associated with the third identifier and the first identifier, wherein the third set of transactions is a subset of the transactions.

7. The computer-implemented method of any one of the preceding claims, wherein the first classification type represents a classification of the public addresses by identity of the entities.

8. The computer-implemented method of any one of the preceding claims, wherein the one or more identifiers of the first classification type includes one or more of the following:

names of the entities;
hexadecimal codes of the names;
Australian Business Numbers of the entities;
Network address; or
Australian Company Numbers of the entities.

9. The computer-implemented method of claim 6, wherein the second classification type represents a classification of the public addresses by account type of the entities.

10. The computer-implemented method of claim 9, wherein the one or more identifiers of the second classification type comprise any one or more of the following accounts:

credit account;
debit account;
accounts receivable;
salary account; and/or
interest account.

11. The computer-implemented method of any one of the preceding claims, wherein associating the public addresses of the entities with the one or more identifiers of the first classification type comprises:
storing, in entries of a look-up table, the one or more identifiers of the first classification type in association with the public addresses of the entities, each entry of the look-up table including one of the one or more identifiers of the first classification type and one of the public addresses.

12. The computer-implemented method of any one of claims 1 to 10, wherein associating the public addresses of the entities with the one or more identifiers of the first classification type comprises:
using a script to associate the one or more identifiers of the first classification type with the public addresses in the blockchain.

13. The computer-implemented method of claim 1, further comprising:

receiving the parent indication from the communication network;
determining the first deterministic key based on the parent indication;
determining the second deterministic key based on the first deterministic key and the child indication;
determining a fourth set of public addresses associated with the second deterministic key, wherein the fourth set of public addresses is a subset of the public addresses;
determining a fourth set of transactions in the blockchain based on the fourth set of public addresses associated with the second deterministic key, wherein the fourth set of transactions is a subset of the transactions; and
generating a third data output based on the fourth set of transactions.

14. The computer-implemented method of claim 13, wherein determining the fourth set of public addresses further comprises determining the fourth set of public addresses based on the second deterministic key.

15. The computer-implemented method of any one of the preceding claims, wherein the public addresses comprise public keys of asymmetric cryptography pairs, each of the asymmetric cryptography pairs including one of the public keys and a private key corresponding to the one of the public keys.

16. The computer-implemented method of any one of the preceding claims, wherein the blockchain is generated in accordance with a Bitcoin protocol.

17. The computer-implemented method of claim 16, wherein the public addresses comprise Bitcoin addresses of the entities used in the Bitcoin protocol.

18. A computer system comprising at least one processor configured to:

associate each public address of a plurality of public addresses of a plurality of entities with a corresponding identifier from a plurality of identifiers of a first classification type to classify the public addresses based on the first classification type;
receive, from a communication network, a first identifier of the identifiers of the first classification type, the first identifier identifying an entity of the plurality of entities, wherein the first classification type represents a classification of the public addresses by identify of the entities using a tree structure that links the entities, wherein the identifiers of the first classification type comprise deterministic keys associated with the entities, wherein the deterministic keys are generated based on the tree structure;
determine a first set of public addresses associated with the first identifier to determine a first set of public addresses used by the entity, wherein the first set of public addresses is a subset of the public addresses; and
determine a first set of transactions in a blockchain based on the first set of public addresses associated with the first identifier by searching the blockchain for transactions having one of the first set of public addresses used by the entity, wherein the entities include a parent entity and a child entity associated with the parent entity in the tree structure, wherein

the parent entity is associated with a first deterministic key of the deterministic keys, and the child entity is associated with a second deterministic key of the deterministic keys, and

the first deterministic key is determined based on a parent indication associated with the parent entity, and the second deterministic key is determined based on the first deterministic key and a child indication associated with the child entity.

**Patentansprüche**

1.  Computerimplementiertes Verfahren (200), umfassend:

    Verbinden (210) jeder Adresse einer Vielzahl von öffentlichen Adressen einer Vielzahl von Entitäten mit einem entsprechenden Identifikator aus einer Vielzahl von Identifikatoren eines ersten Klassifizierungstyps, um die öffentlichen Adressen basierend auf dem ersten Klassifizierungstyp zu klassifizieren;
    Empfangen (220) eines ersten Identifikators der Identifikatoren des ersten Klassifizierungstyps von einem Kommunikationsnetzwerk (101), wobei der erste Identifikator eine Entität der Vielzahl von Entitäten identifiziert, wobei der erste Klassifizierungstyp eine Klassifizierung der öffentlichen Adressen durch Identitäten der Entitäten unter Verwendung einer Baumstruktur, die die Entitäten verbindet, darstellt, wobei die Identifikatoren des ersten Klassifizierungstyps deterministische Schlüssel umfassen, die mit den Entitäten verbunden sind, wobei die deterministischen Schlüssel basierend auf der Baumstruktur erzeugt werden;
    Bestimmen (230) eines ersten Satzes von öffentlichen Adressen, die mit dem ersten Identifikator verbunden sind, um einen ersten Satz von öffentlichen Adressen zu bestimmen, der von der Entität verwendet wird, wobei der erste Satz von öffentlichen Adressen eine Teilmenge der öffentlichen Adressen ist; und
    Identifizieren (240) eines ersten Satzes von Transaktionen in einer Blockchain (109) basierend auf dem ersten Satz von öffentlichen Adressen, die mit dem ersten Identifikator verbunden sind, durch Durchsuchen der Blockchain nach Transaktionen, die eine von dem ersten Satz von öffentlichen Adressen, der von der Entität verwendet wird, aufweist, wobei die Entitäten eine übergeordnete Entität und eine untergeordnete Entität, die mit der übergeordneten Entität in der Baumstruktur verbunden ist, einschließen, wobei
    die übergeordnete Entität mit einem ersten deterministischen Schlüssel der deterministischen Schlüssel verbunden ist, und die untergeordnete Entität mit einem zweiten deterministischen Schlüssel der deterministischen Schlüssel verbunden ist, und
    wobei der erste deterministische Schlüssel basierend auf einer mit der übergeordneten Entität verbundenen übergeordneten Angabe bestimmt wird, und der zweite deterministische Schlüssel basierend auf dem ersten deterministischen Schlüssel und einer mit der untergeordneten Entität verbundenen untergeordneten Angabe bestimmt wird.

2.  Computerimplementiertes Verfahren nach Anspruch 1, weiter umfassend:

    Empfangen eines ersten Datenelements, das mit dem ersten Identifikator verbunden ist, von dem Kommunikationsnetzwerk;
    Erzeugen einer ersten Datenausgabe basierend auf dem ersten Datenelement und dem ersten Satz von Transaktionen.

3.  Computerimplementiertes Verfahren nach Anspruch 2, weiter umfassend:

    Empfangen eines zweiten Datenelements, das mit einem zweiten Identifikator des einen oder der mehreren Identifikatoren des ersten Klassifizierungstyps verbunden ist, von einem Kommunikationsnetzwerk;
    Bestimmen eines zweiten Satzes von öffentlichen Adressen, die mit dem zweiten Identifikator verbunden sind, wobei der zweite Satz von öffentlichen Adressen eine Teilmenge der öffentlichen Adressen ist;
    Bestimmen eines zweiten Satzes von Transaktionen in der Blockchain basierend auf dem zweiten Satz von öffentlichen Adressen, die mit dem zweiten Identifikator verbunden sind, wobei der zweite Satz von Transaktionen eine Teilmenge der Transaktionen ist;
    Erzeugen einer zweiten Datenausgabe basierend auf dem zweiten Datenelement und dem zweiten Satz von Transaktionen;
    Durchführen einer ersten Hash-Operation an der ersten Datenausgabe, um eine erste Ausgabe-Hash-Darstellung für die erste Datenausgabe zu erzeugen;
    Durchführen einer zweiten Hash-Operation an der zweiten Datenausgabe, um eine zweite Ausgabe-Hash-Darstellung für die zweite Datenausgabe zu erzeugen; und

Kombinieren der ersten Ausgabe-Hash-Darstellung und der zweiten Ausgabe-Hash-Darstellung;
Durchführen einer dritten Hash-Operation an der kombinierten ersten Ausgabe-Hash-Darstellung und zweiten Ausgabe-Hash-Darstellung, um eine dritte Hash-Darstellung für die kombinierte erste Ausgabe-Hash-Darstellung und zweite Ausgabe-Hash-Darstellung zu erzeugen.

4. Computerimplementiertes Verfahren nach Anspruch 3, weiter umfassend ein Speichern der dritten Ausgabe-Hash-Darstellung in einer Speichervorrichtung.

5. Computerimplementiertes Verfahren nach Anspruch 3, weiter umfassend:

   Kombinieren der ersten Datenausgabe und der zweiten Datenausgabe;
   Durchführen einer Hash-Operation an der kombinierten ersten Datenausgabe und zweiten Datenausgabe, um eine Hash-Darstellung für die kombinierte erste Datenausgabe und zweite Datenausgabe zu erzeugen.

6. Computerimplementiertes Verfahren nach einem der vorstehenden Ansprüche, weiter umfassend:

   Verbinden der öffentlichen Adressen der Entitäten mit einem oder mehreren Identifikatoren eines zweiten Klassifizierungstyps, um die öffentlichen Adressen basierend auf dem zweiten Klassifizierungstyp zu klassifizieren;
   Empfangen eines dritten Identifikators des einen oder der mehreren Klassifizierungsidentifikatoren des zweiten Klassifizierungstyps von dem Kommunikationsnetzwerk;
   Bestimmen eines dritten Satzes von öffentlichen Adressen, die mit dem dritten Identifikator und dem ersten Identifikator verbunden sind, wobei der dritte Satz von öffentlichen Adressen eine Teilmenge der öffentlichen Adressen ist; und
   Bestimmen eines dritten Satzes von Transaktionen in der Blockchain basierend auf dem dritten Satz von öffentlichen Adressen, die mit dem dritten Identifikator und dem ersten Identifikator verbunden sind, wobei der dritte Satz von Transaktionen eine Teilmenge der Transaktionen ist.

7. Computerimplementiertes Verfahren nach einem der vorstehenden Ansprüche, wobei der erste Klassifizierungstyp eine Klassifizierung der öffentlichen Adressen nach Identität der Entitäten darstellt.

8. Computerimplementiertes Verfahren nach einem der vorstehenden Ansprüche, wobei der eine oder die mehreren Identifikatoren des ersten Klassifizierungstyps eines oder mehrere der Folgenden einschließen:

   Namen der Entitäten;
   hexadezimale Codes der Namen;
   Australische Business-Nummern der Entitäten;
   Netzwerkadresse; oder
   Australische Firmennummern der Entitäten.

9. Computerimplementiertes Verfahren nach Anspruch 6, wobei der zweite Klassifizierungstyp eine Klassifizierung der öffentlichen Adressen nach Kontotyp der Entitäten darstellt.

10. Computerimplementiertes Verfahren nach Anspruch 9, wobei der eine oder die mehreren Identifikatoren des zweiten Klassifizierungstyps eines oder mehrere der folgenden Konten umfassen:

    Habenkonto;
    Sollkonto;
    Debitorenkonto;
    Gehaltskonto; und/oder
    Zinskonto.

11. Computerimplementiertes Verfahren nach einem der vorstehenden Ansprüche, wobei das Verbinden der öffentlichen Adressen der Entitäten mit dem einen oder den mehreren Identifikatoren des ersten Klassifizierungstyps umfasst: Speichern des einen oder der mehreren Identifikatoren des ersten Klassifizierungstyps in Verbindung mit den öffentlichen Adressen der Stellen in Einträgen einer Nachschlagetabelle, wobei jeder Eintrag der Nachschlagetabelle einen des einen oder der mehreren Identifikatoren des ersten Klassifizierungstyps und eine der öffentlichen Adressen einschließt.

12. Computerimplementiertes Verfahren nach einem der Ansprüche 1 bis 10, wobei das Verbinden der öffentlichen Adressen der Entitäten mit dem einen oder den mehreren Identifikatoren des ersten Klassifizierungstyps umfasst: Verwenden eines Skripts, um den einen oder die mehreren Identifikatoren des ersten Klassifizierungstyps mit den öffentlichen Adressen in der Blockchain zu verbinden.

13. Computerimplementiertes Verfahren nach Anspruch 1, weiter umfassend:

Empfangen der übergeordneten Angabe von dem Kommunikationsnetzwerk;
Bestimmen des ersten deterministischen Schlüssels basierend auf der übergeordneten Angabe;
Bestimmen des zweiten deterministischen Schlüssels basierend auf dem ersten deterministischen Schlüssel und der untergeordneten Angabe;
Bestimmen eines vierten Satzes von öffentlichen Adressen, die mit dem zweiten deterministischen Schlüssel verbunden sind, wobei der vierte Satz von öffentlichen Adressen eine Teilmenge der öffentlichen Adressen ist;
Bestimmen eines vierten Satzes von Transaktionen in der Blockchain basierend auf dem vierten Satz von öffentlichen Adressen, die mit dem zweiten deterministischen Schlüssel verbunden sind, wobei der vierte Satz von Transaktionen eine Teilmenge der Transaktionen ist; und
Erzeugen einer dritten Datenausgabe basierend auf dem vierten Satz von Transaktionen.

14. Computerimplementiertes Verfahren nach Anspruch 13, wobei das Bestimmen des vierten Satzes von öffentlichen Adressen weiter ein Bestimmen des vierten Satzes von öffentlichen Adressen basierend auf dem zweiten deterministischen Schlüssel umfasst.

15. Computerimplementiertes Verfahren nach einem der vorstehenden Ansprüche, wobei die öffentlichen Adressen öffentliche Schlüssel von asymmetrischen Kryptographiepaaren umfassen, wobei jedes der asymmetrischen Kryptographiepaare einen der öffentlichen Schlüssel und einen privaten Schlüssel, der dem einen der öffentlichen Schlüssel entspricht, einschließt.

16. Computerimplementiertes Verfahren nach einem der vorstehenden Ansprüche, wobei die Blockchain in Übereinstimmung mit einem Bitcoin-Protokoll erzeugt wird.

17. Computerimplementiertes Verfahren nach Anspruch 16, wobei die öffentlichen Adressen Bitcoin-Adressen der Entitäten umfassen, die im Bitcoin-Protokoll verwendet werden.

18. Computersystem, umfassend mindestens einen Prozessor, der konfiguriert ist zum:

Verbinden jeder Adresse einer Vielzahl von öffentlichen Adressen einer Vielzahl von Entitäten mit einem entsprechenden Identifikator aus einer Vielzahl von Identifikatoren eines ersten Klassifizierungstyps, um die öffentlichen Adressen basierend auf dem ersten Klassifizierungstyp zu klassifizieren;
Empfangen eines ersten Identifikators der Identifikatoren des ersten Klassifizierungstyps von einem Kommunikationsnetzwerk, wobei der erste Identifikator eine Entität der Vielzahl von Entitäten identifiziert, wobei der erste Klassifizierungstyp eine Klassifizierung der öffentlichen Adressen durch Identifizieren der Entitäten unter Verwendung einer Baumstruktur, die die Entitäten verbindet, darstellt, wobei die Identifikatoren des ersten Klassifizierungstyps deterministische Schlüssel umfassen, die mit den Entitäten verbunden sind, wobei die deterministischen Schlüssel basierend auf der Baumstruktur erzeugt werden;
Bestimmen eines ersten Satzes von öffentlichen Adressen, die mit dem ersten Identifikator verbunden sind, um einen ersten Satz von öffentlichen Adressen zu bestimmen, der von der Entität verwendet wird, wobei der erste Satz von öffentlichen Adressen eine Teilmenge der öffentlichen Adressen ist; und
Bestimmen eines ersten Satzes von Transaktionen in einer Blockchain basierend auf dem ersten Satz von öffentlichen Adressen, die mit dem ersten Identifikator verbunden sind, durch Durchsuchen der Blockchain nach Transaktionen, die eine von dem ersten Satz von öffentlichen Adressen, der von der Entität verwendet wird, aufweist, wobei die Entitäten eine übergeordnete Entität und eine untergeordnete Entität, die mit der übergeordneten Entität in der Baumstruktur verbunden ist, einschließen, wobei
die übergeordnete Entität mit einem ersten deterministischen Schlüssel der deterministischen Schlüssel verbunden ist, und die untergeordnete Entität mit einem zweiten deterministischen Schlüssel der deterministischen Schlüssel verbunden ist, und
wobei der erste deterministische Schlüssel basierend auf einer mit der übergeordneten Entität verbundenen übergeordneten Angabe bestimmt wird, und der zweite deterministische Schlüssel basierend auf dem ersten deterministischen Schlüssel und einer mit der untergeordneten Entität verbundenen untergeordneten Angabe bestimmt wird.

**Revendications**

1. Procédé mis en œuvre par ordinateur (200) comprenant :

    l'association (210) de chaque adresse d'une pluralité d'adresses publiques d'une pluralité d'entités à un identifiant correspondant parmi une pluralité d'identifiants d'un premier type de classification pour classifier les adresses publiques sur la base du premier type de classification ;
    la réception (220), à partir d'un réseau de communication (101), d'un premier identifiant des identifiants du premier type de classification, le premier identifiant identifiant une entité de la pluralité d'entités, dans lequel le premier type de classification représente une classification des adresses publiques par des identités des entités utilisant une structure arborescente qui relie les entités, dans lequel les identifiants du premier type de classification comprennent des clés déterministes associées aux entités, dans lequel les clés déterministes sont générées sur la base de la structure arborescente ;
    la détermination (230) d'un premier ensemble d'adresses publiques associé au premier identifiant pour déterminer un premier ensemble d'adresses publiques utilisé par l'entité, dans lequel le premier ensemble d'adresses publiques est un sous-ensemble des adresses publiques ; et
    l'identification (240) d'un premier ensemble de transactions dans une chaîne de blocs (109) sur la base du premier ensemble d'adresses publiques associé au premier identifiant par la recherche de la chaîne de blocs pour des transactions présentant l'un du premier ensemble d'adresses publiques utilisé par l'entité, dans lequel les entités incluent une entité mère et une entité enfant associée à l'entité mère dans la structure arborescente, dans lequel
    l'entité mère est associée à une première clé déterministe des clés déterministes, et l'entité enfant est associée à une seconde clé déterministe des clés déterministes, et
    la première clé déterministe est déterminée sur la base d'une indication mère associée à l'entité mère, et la seconde clé déterministe est déterminée sur la base de la première clé déterministe et d'une indication enfant associée à l'entité enfant.

2. Procédé mis en œuvre par ordinateur selon la revendication 1, comprenant en outre :

    la réception, à partir du réseau de communication, d'un premier élément de données associé au premier identifiant ;
    la génération d'une première sortie de données sur la base du premier élément de données et du premier ensemble de transactions.

3. Procédé mis en œuvre par ordinateur selon la revendication 2, comprenant en outre :

    la réception, à partir d'un réseau de communication, d'un second élément de données associé à un deuxième identifiant du un ou des plusieurs identifiants du premier type de classification ;
    la détermination d'un deuxième ensemble d'adresses publiques associé au deuxième identifiant, dans lequel le deuxième ensemble d'adresses publiques est un sous-ensemble des adresses publiques ;
    la détermination d'un deuxième ensemble de transactions dans la chaîne de blocs sur la base du deuxième ensemble d'adresses publiques associé au deuxième identifiant, dans lequel le deuxième ensemble de transactions est un sous-ensemble des transactions ;
    la génération d'une deuxième sortie de données sur la base du second élément de données et du deuxième ensemble de transactions ;
    la réalisation d'une première opération de hachage sur la première sortie de données pour générer une première représentation de hachage de sortie pour la première sortie de données ;
    la réalisation d'une deuxième opération de hachage sur la deuxième sortie de données pour générer une deuxième représentation de hachage de sortie pour la deuxième sortie de données ; et
    la combinaison de la première représentation de hachage de sortie et de la deuxième représentation de hachage de sortie ;
    la réalisation d'une troisième opération de hachage sur les première représentation de hachage de sortie et deuxième représentation de hachage de sortie combinées pour générer une troisième représentation de hachage pour les première représentation de hachage de sortie et deuxième représentation de hachage de sortie combinées.

4. Procédé mis en œuvre par ordinateur selon la revendication 3, comprenant en outre le stockage de la troisième représentation de hachage de sortie dans un dispositif de stockage.

5. Procédé mis en œuvre par ordinateur selon la revendication 3, comprenant en outre :

la combinaison de la première sortie de données et de la deuxième sortie de données ;
la réalisation d'une opération de hachage sur les première sortie de données et deuxième sortie de données combinées pour générer une représentation de hachage pour les première sortie de données et deuxième sortie de données combinées.

6. Procédé mis en œuvre par ordinateur selon l'une quelconque des revendications précédentes, comprenant en outre :

l'association des adresses publiques des entités à un ou plusieurs identifiants d'un second type de classification pour classifier les adresses publiques sur la base du second type de classification ;
la réception, à partir du réseau de communication, d'un troisième identifiant du un ou des plusieurs identifiants de classification du second type de classification ;
la détermination d'un troisième ensemble d'adresses publiques associé au troisième identifiant et au premier identifiant, dans lequel le troisième ensemble d'adresses publiques est un sous-ensemble des adresses publiques ; et
la détermination d'un troisième ensemble de transactions dans la chaîne de blocs sur la base du troisième ensemble d'adresses publiques associé au troisième identifiant et au premier identifiant, dans lequel le troisième ensemble de transactions est un sous-ensemble des transactions.

7. Procédé mis en œuvre par ordinateur selon l'une quelconque des revendications précédentes, dans lequel le premier type de classification représente une classification des adresses publiques par identité des entités.

8. Procédé mis en œuvre par ordinateur selon l'une quelconque des revendications précédentes, dans lequel le un ou les plusieurs identifiants du premier type de classification inclut un ou plusieurs des éléments suivants :

noms des entités ;
codes hexadécimaux des noms ;
Numéros d'immatriculation australiens des entités ;
Adresse de réseau ; ou
Numéros de société australiens des entités.

9. Procédé mis en œuvre par ordinateur selon la revendication 6, dans lequel le second type de classification représente une classification des adresses publiques par type de compte des entités.

10. Procédé mis en œuvre par ordinateur selon la revendication 9, dans lequel le un ou les plusieurs identifiants du second type de classification comprennent l'un quelconque ou les plusieurs quelconques des comptes suivants :

compte de crédit ;
compte de débit ;
comptes débiteurs ;
compte salaire ; et/ou
compte d'intérêts.

11. Procédé mis en œuvre par ordinateur selon l'une quelconque des revendications précédentes, dans lequel l'association des adresses publiques des entités au un ou aux plusieurs identifiants du premier type de classification comprend :
le stockage, dans des entrées d'une table de consultation, du un ou des plusieurs identifiants du premier type de classification en association avec les adresses publiques des entités, chaque entrée de la table de consultation incluant un ou une du un ou des plusieurs identifiants du premier type de classification et de l'une des adresses publiques.

12. Procédé mis en œuvre par ordinateur selon l'une quelconque des revendications 1 à 10, dans lequel l'association des adresses publiques des entités au un ou aux plusieurs identifiants du premier type de classification comprend :
l'utilisation d'un script pour associer le un ou les plusieurs identifiants du premier type de classification aux adresses publiques dans la chaîne de blocs.

13. Procédé mis en œuvre par ordinateur selon la revendication 1, comprenant en outre :

la réception de l'indication mère à partir du réseau de communication ;
la détermination de la première clé déterministe sur la base de l'indication mère ;
la détermination de la seconde clé déterministe sur la base de la première clé déterministe et de l'indication enfant ;
la détermination d'un quatrième ensemble d'adresses publiques associé à la seconde clé déterministe, dans lequel le quatrième ensemble d'adresses publiques est un sous-ensemble des adresses publiques ;
la détermination d'un quatrième ensemble de transactions dans la chaîne de blocs sur la base du quatrième ensemble d'adresses publiques associé à la seconde clé déterministe, dans lequel le quatrième ensemble de transactions est un sous-ensemble des transactions ; et
la génération d'une troisième sortie de données sur la base du quatrième ensemble de transactions.

14. Procédé mis en œuvre par ordinateur selon la revendication 13, dans lequel la détermination du quatrième ensemble d'adresses publiques comprend en outre la détermination du quatrième ensemble d'adresses publiques sur la base de la seconde clé déterministe.

15. Procédé mis en œuvre par ordinateur selon l'une quelconque des revendications précédentes, dans lequel les adresses publiques comprennent des clés publiques de paires à cryptographie asymétrique, chacune des paires à cryptographie asymétrique incluant l'une des clés publiques et une clé privée correspondant à la une des clés publiques.

16. Procédé mis en œuvre par ordinateur selon l'une quelconque des revendications précédentes, dans lequel la chaîne de blocs est générée conformément à un protocole Bitcoin.

17. Procédé mis en œuvre par ordinateur selon la revendication 16, dans lequel les adresses publiques comprennent des adresses Bitcoin des entités utilisées dans le protocole Bitcoin.

18. Système d'ordinateur comprenant au moins un processeur configuré pour :

associer chaque adresse publique d'une pluralité d'adresses publiques d'une pluralité d'entités à un identifiant correspondant parmi une pluralité d'identifiants d'un premier type de classification pour classifier les adresses publiques sur la base du premier type de classification ;
recevoir, à partir d'un réseau de communication, un premier identifiant des identifiants du premier type de classification, le premier identifiant identifiant une entité de la pluralité d'entités,
dans lequel le premier type de classification représente une classification des adresses publiques par une identité des entités utilisant une structure arborescente qui relie les entités, dans lequel les identifiants du premier type de classification comprennent des clés déterministes associées aux entités, dans lequel les clés déterministes sont générées sur la base de la structure arborescente ;
déterminer un premier ensemble d'adresses publiques associé au premier identifiant pour déterminer un premier ensemble d'adresses publiques utilisé par l'entité, dans lequel le premier ensemble d'adresses publiques est un sous-ensemble des adresses publiques ; et
déterminer un premier ensemble de transactions dans une chaîne de blocs sur la base du premier ensemble d'adresses publiques associé au premier identifiant par la recherche de la chaîne de blocs pour des transactions présentant l'un du premier ensemble d'adresses publiques utilisé par l'entité, dans lequel les entités incluent une entité mère et une entité enfant associée à l'entité mère dans la structure arborescente, dans lequel
l'entité mère est associée à une première clé déterministe des clés déterministes, et l'entité enfant est associée à une seconde clé déterministe des clés déterministes, et
la première clé déterministe est déterminée sur la base d'une indication mère associée à l'entité mère, et la seconde clé déterministe est déterminée sur la base de la première clé déterministe et d'une indication enfant associée à l'entité enfant.

100

Entity
105-1
"Ducks Myth
Electronics"

Entity
105-3
"iVision
Pty Ltd"

Entity
105-5
"NotAnAcronym
Pty Ltd"

Entity
105-7
"ITS
Contractors"

Communication Network
101

Entity
103
"Alice"

Accounting
Server
111

Currency
Processing Terminal
107

Public Shared
Database
109

FIG. 1

200

associating public addresses of the entities with one or more identifiers of a first classification
type to classify the public addresses based on the first classification type
210

receiving, from a communication network, a first identifier of one or more identifiers of the
first classification type
220

determining a first set of public addresses associated with the first identifier, wherein the first
set of public address is a subset of the public addresses
230

determining a first set of transactions in the peer-to-peer distributed ledger based on the first
set of public addresses associated with the first identifier, wherein the first set of transactions is
a subset of the transactions
240

FIG. 2

<u>310</u>                                        311                                                                    313

| Public Address | Client ID |
|---|---|
| 14qFsq9xFrf4QYBUUnvJ3WtJd4neAJqeLE | Ducks Myth Electronics |
| 13trEkNQ5pFJKixmxcHSMUWANZPLzGnpdZ | iVision Pty Ltd |
| 1Q1iKCVSyJxje6onnwEcYedSNf1XT5axZq | Ducks Myth Electronics |
| 3LnCYE1s19q8XruHY65NfBydXjTsufyGwT | NotAnAcronym Pty Ltd |
| 3L8mPEyogkxkJgbzdBCTVCZfz9FV3EtVYp | ITS Contractors |

# FIG. 3(a)

<u>320</u>                              311                                            313                                    315

| Public Address | Client ID | Account Type |
|---|---|---|
| 14qFsq9xFrf4QYBUUnvJ3WtJd4neAJqeLE | Ducks Myth Electronics | Debit Account |
| 13trEkNQ5pFJKixmxcHSMUWANZPLzGnpdZ | iVision Pty Ltd | Debit Account |
| 1Q1iKCVSyJxje6onnwEcYedSNf1XT5axZq | Ducks Myth Electronics | Credit Account |
| 3LnCYE1s19q8XruHY65NfBydXjTsufyGwT | NotAnAcronym Pty Ltd | Credit Account |
| 3L8mPEyogkxkJgbzdBCTVCZfz9FV3EtVYp | ITS Contractors | Credit Account |

# FIG. 3(b)

400

FIG. 4(a)

420

| Public Address | Generator Value |
|---|---|
| 14qFsq9xFrf4QYBUUnvJ3WtJd4neAJqeLE | GV407 |
| 13trEkNQ5pFJKixmxcHSMUWANZPLzGnpdZ | GV409 |
| 1Q1iKCVSyJxje6onnwEcYedSNf1XT5axZq | GV407 |
| 3LnCYE1s19q8XruHY65NfBydXjTsufyGwT | GV413 |
| 3L8mPEyogkxkJgbzdBCTVCZfz9FV3EtVYp | GV411 |

FIG. 4(b)

500

communication port
540

Bus
530

memory
520

processor
510

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150244690 A1